# EUROPEAN PATENT APPLICATION

(11) **EP 4 796 965 A1**
(43) Date of publication of application: **26.08.2026**
(21) Application number: 24884141.3
(22) Date of filing: 16.08.2024
(51) Int. Cl.: G02B 6/12, G02B 6/42

(54) **PACKAGING STRUCTURE, OPTICAL MODULE AND OPTICAL SYSTEM**

(30) Priority: 01.11.2023 CN 202311447177
(71) Applicant: HUAWEI TECHNOLOGIES CO., LTD., Shenzhen 518129 (CN)
(72) Inventor: ZHANG, Xueming, Shenzhen, Guangdong 518129 (CN); ZHUANG, Sixiang, Shenzhen, Guangdong 518129 (CN); ZONG, Fei, Shenzhen, Guangdong 518129 (CN); XIAO, Pengcheng, Shenzhen, Guangdong 518129 (CN); XIA, Yuan, Shenzhen, Guangdong 518129 (CN); YANG, Yiting, Shenzhen, Guangdong 518129 (CN)
(74) Representative: Thun, Clemens
(86) International application number: PCT/CN2024/112763
(87) International publication number: WO 2025/092134

(57) **Abstract**

This application provides a packaging structure, an optical module, and an optical system. The packaging structure includes a fiber unit and a chip unit. The chip unit includes a photonic chip and a chip lid, the chip lid is snap-fitted to the photonic chip, a spot size converter is disposed in the photonic chip, and the spot size converter includes a cantilever beam waveguide and a first groove. The fiber unit includes a fiber, a substrate, and a fiber lid substrate. The waveguide is coupled to the fiber. A first bonding portion is disposed between the chip lid and the substrate, and a second bonding portion is disposed between the photonic chip and the fiber lid; or a first bonding portion is disposed between the chip lid and the fiber lid, and a second bonding portion is disposed between the photonic chip and the substrate. In the packaging structure, the chip lid is disposed on the photonic chip to form the chip unit, to increase a bonding area between the chip unit and a fiber array, improve mechanical stability of the packaging structure, and implement alignment between the waveguide in the photonic chip and a fiber in the fiber array.

## Description

This application claims priority to Chinese Patent Application No. 202311447177.1, filed with the China National Intellectual Property Administration on November 1, 2023 and entitled "PACKAGING STRUCTURE, OPTICAL MODULE, AND OPTICAL SYSTEM", which is incorporated herein by reference in its entirety.

### TECHNICAL FIELD

This application relates to the field of optical communication, and in particular, to a packaging structure, an optical module, and an optical system.

### BACKGROUND

With rapid development of big data and cloud computing, network traffic in data centers increases sharply, which poses greater challenges to data center networks and optical interconnection technologies. A core of a silicon photonics technology is to use silicon as a basic material of an optical device, and produce optical elements such as an optical waveguide, a modulator, and an optical switch on a photonic chip by using an advanced manufacturing process. These devices can implement functions such as generation, transmission, modulation and control, and detection of optical signals.

Packaging of a photonic chip (photonic integrated circuit, PIC) and a fiber array (fiber array, FA) is one important technical difficulty in the silicon photonics technology. Because a mode field diameter of a waveguide in the photonic chip is small and does not match a mode field diameter of a standard fiber, if the waveguide is directly coupled to the fiber, a large coupling loss is caused. Currently, a packaging structure of the photonic chip and a fiber may be classified into an edge coupling packaging structure, a grating coupling packaging structure, and the like. In a packaging form of an edge coupling structure, a spot size converter (spot size converter, SSC) may be disposed at an edge of the photonic chip, in other words, at an end of the photonic chip, so that a spot size of the waveguide matches a spot size of the fiber. The spot size converter may be in a form of a cantilever. A bottom of a cantilever spot size converter is etched to form a first groove, a waveguide is suspended relative to the first groove to form a cantilever beam waveguide, and a transmitted optical signal is limited to be transmitted in the cantilever beam waveguide through air in the first groove, to implement mode field matching and reduce packaging losses. A packaging manner of using the cantilever spot size converter is end face bonding coupling. However, a cantilever structure is stress-sensitive. For example, a change in an ambient temperature, application of an external force, movement of a packaging structure, or the like may cause a stress to be applied to the cantilever beam waveguide, leading to a change in an optical transmission characteristic of the cantilever beam waveguide. A high stress may further cause damage to a mechanical structure of the waveguide. In addition, if the photonic chip and the fiber array are directly packaged, the fiber is prone to shift, and mechanical reliability of the packaging is poor.

Therefore, in an edge coupling packaging structure that includes a cantilever spot size converter, how to implement stress balance of a cantilever structure and ensure that a fiber is not prone to shift is a pressing technical challenge.

### SUMMARY

This application provides a packaging structure, an optical module, and an optical system. A chip lid is disposed on a photonic chip to form a chip unit, to increase a bonding area between the chip unit and a fiber array, improve mechanical stability of the packaging structure, and implement stress balance of a cantilever beam waveguide.

According to a first aspect, a packaging structure is provided, including a chip unit and a fiber unit, where the chip unit includes a photonic chip and a chip lid, the chip lid is snap-fitted to the photonic chip, a spot size converter is disposed in the photonic chip, the spot size converter includes a cantilever beam waveguide and a first groove, and there is a gap between the cantilever beam waveguide and the first groove; and the fiber unit includes a fiber, a substrate, and a fiber lid, where a second groove is provided on the substrate, the second groove is configured to accommodate the fiber, and the fiber lid is snap-fitted to the substrate. The cantilever beam waveguide is coupled to the fiber; and a first bonding portion is disposed between the chip lid and the substrate, and a second bonding portion is disposed between the photonic chip and the fiber lid; or a first bonding portion is disposed between the chip lid and the fiber lid, and a second bonding portion is disposed between the photonic chip and the substrate. In the packaging structure, the chip lid is disposed on the photonic chip, to increase a bonding area between the chip unit and a fiber array, improve mechanical stability of the packaging structure, avoid fiber position movement or even fiber disconnection caused by a change in an ambient temperature, and implement alignment between the cantilever beam waveguide and the fiber. In addition, the chip lid may also be added to balance stresses above and below a position of the first groove near the first bonding portion, to implement low-stress packaging of the cantilever beam waveguide.

With reference to the first aspect, in some implementations of the first aspect, a bottom of the fiber unit is suspended, and that the cantilever beam waveguide is coupled to the fiber includes that an end of the cantilever beam waveguide is butted with an end of the fiber. Therefore, the waveguide in the chip unit is directly butted with the fiber in the fiber unit, to shorten a transmission distance of an optical signal, and reduce packaging losses. In addition, because the chip lid is disposed, a bonding area between the chip unit and the fiber unit can be increased. Even if the bottom of the fiber unit is suspended for accurate alignment between the waveguide and the fiber, mechanical stability of the packaging structure can be ensured.

With reference to the first aspect, in some implementations of the first aspect, on a plane on which a bottom of the photonic chip is located, a projection of the fiber and a projection of the photonic chip have an overlapping part, and a projection of the fiber lid or the substrate that is provided with the first bonding portion between the fiber lid or the substrate and the chip lid at least partially covers the overlapping part. In other words, the fiber is extended to the photonic chip together with the substrate or the fiber lid. In a chip preparation procedure, to separate chips from each other, the chips need to be cut by using a knife or a laser. Therefore, in waveguide etching, the waveguide is recessed, to avoid damage to an end face of the waveguide caused by cutting. By extending the fiber to the photonic chip, transmission losses of the optical signal can be reduced, and coupling efficiency can be optimized. In addition, because the fiber lid or the substrate is also extended to the photonic chip, a specific contact area between the chip unit and the fiber unit is ensured, to improve the mechanical stability of the packaging structure.

With reference to the first aspect, in some implementations of the first aspect, on a plane on which a bottom of the photonic chip is located, a projection of the fiber and a projection of the photonic chip have an overlapping part, and a projection of the chip lid at least partially covers the overlapping part; and the chip lid has a cutoff corner, and the cutoff corner is configured to avoid the fiber. In a chip preparation procedure, to separate chips from each other, the chips need to be cut by using a knife or a laser. Therefore, in waveguide etching, the waveguide is recessed, to avoid damage to an end face of the waveguide caused by cutting. By extending the fiber to the photonic chip, transmission losses of the optical signal can be reduced, and coupling efficiency can be optimized. In addition, to ensure that a contact area between the chip unit and the fiber unit is specific and that transmission of the optical signal is not affected, the cutoff corner needs to be disposed on the chip lid.

With reference to the first aspect, in some implementations of the first aspect, the first bonding portion and/or the second bonding portion are/is made of epoxy resin or acrylic acid; and/or a shrinkage rate of the first bonding portion and/or a shrinkage rate of the second bonding portion are/is less than 0.3%. This prevents displacement between the chip unit and the fiber unit, ensures accurate alignment between the waveguide and the fiber, reduces the packaging losses, ensures a stable connection between the chip unit and the fiber unit, and improves the mechanical stability of the packaging structure.

With reference to the first aspect, in some implementations of the first aspect, the photonic chip includes N cantilever beam waveguides, the fiber unit includes N fibers, the N cantilever beam waveguides are in one-to-one correspondence with the N fibers, and a cantilever beam waveguide in the N cantilever beam waveguides is coupled to a corresponding fiber, where N is a positive integer. In some implementations, N is a positive integer greater than or equal to 2. When the packaging structure is a multi-channel packaging structure, the chip lid is added, to increase the bonding area between the chip unit and the fiber unit, improve stability of the packaging structure, and implement accurate alignment between a plurality of waveguides and a plurality of fibers.

With reference to the first aspect, in some implementations of the first aspect, the packaging structure includes M fiber units, the photonic chip includes M spot size converters, the M fiber units are in one-to-one correspondence with the M spot size converters, and a fiber unit in the M fiber units is mutually coupled to a corresponding spot size converter, where M is a positive integer. In some implementations, M is a positive integer greater than or equal to 2. The packaging structure may be a co-packaging structure, to shorten the transmission distance of the optical signal, reduce the packaging losses, and reduce system costs and energy losses.

According to a second aspect, the packaging structure according to the first aspect and any possible implementation of the first aspect and an optical assembly are included, where the optical assembly is optically connected to the packaging structure, and the optical assembly is configured to receive and/or send an optical signal.

According to a third aspect, an optical system is provided, including an optoelectronic device and the optical module according to the second aspect and any possible implementation, where the optoelectronic device is connected to the optical module, and the optoelectronic device is any one of an optical switch, a fiber router, and a fiber network adapter. The optoelectronic device may include a plurality of ports, each of the plurality of ports corresponds to one optical transmission channel, and the port in the plurality of ports is connected to the optical module, to implement multi-channel and high-rate data transmission.

### BRIEF DESCRIPTION OF DRAWINGS

FIG. 1A to FIG. 1C are diagrams of a packaging structure according to an embodiment of this application;
FIG. 2 is a diagram of a spot size converter according to an embodiment of this application;
FIG. 3A and FIG. 3B are diagrams of another packaging structure according to an embodiment of this application;
FIG. 4 is a diagram of another packaging structure according to an embodiment of this application;
FIG. 5 is a diagram of an optical module according to an embodiment of this application; and
FIG. 6 is a diagram of an optical system according to an embodiment of this application.

### DESCRIPTION OF EMBODIMENTS

The following describes technical solutions of this application with reference to the accompanying drawings.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more of the features.

Reference to "an embodiment", "some embodiments", or the like described in this specification means that a specific feature, structure, or characteristic described based on the embodiment is included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "contain", "have", and their variants all mean "include but are not limited to", unless otherwise specifically emphasized in another manner.

In the descriptions of embodiments of this application, an orientation or a position relationship indicated by the term "up", "down", "vertical", "horizontal", or the like is defined relative to an orientation or a position at which a component is schematically placed in the accompanying drawings. It should be understood that these directional terms are relative concepts, and are used for relative description and clarification instead of indicating or implying that a specified apparatus or component needs to have a specific orientation or be constructed and operated in a specific orientation. These directional terms may vary based on changes of positions of the components in the accompanying drawings, and therefore cannot be understood as a limitation on this application.

In the following embodiments of this application, the terms such as "include", "have", and any variants thereof are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

In embodiments of this application, the word like "example" or "for example" is used to represent giving an example, an illustration, or a description. An embodiment or design solution described with "example" or "for example" should not be explained as being more preferred or having more advantages than another embodiment or design solution. Use of a word like "example" or "for example" is intended to present a related concept in a specific manner for ease of understanding.

With rapid development of big data and cloud computing, network traffic in data centers increases sharply, which poses greater challenges to data center networks and optical interconnection technologies. In a conventional data center network, there are some limitations in using an electronic interconnection technology, for example, problems such as high power consumption, limited bandwidth, and high latency. To meet requirements of high bandwidth, low latency, and energy saving, a silicon photonics technology has attracted much attention. A core of the silicon photonics technology is to use silicon as a basic material of an optical device, and produce optical elements such as an optical waveguide, a modulator, and an optical switch on a photonic chip by using an advanced manufacturing process. These devices can implement functions such as generation, transmission, modulation and control, and detection of optical signals. Compared with conventional optical devices, the devices produced by using the silicon photonics technology have advantages such as low manufacturing costs, high integration, and high compatibility.

Packaging of a photonic chip (photonic integrated circuit, PIC) and a fiber array (fiber array, FA) is one important technical difficulty in the silicon photonics technology. Because a mode field diameter of a waveguide in the photonic chip is small and does not match a mode field diameter of a standard fiber, if the waveguide is directly coupled to the fiber, a large coupling loss is caused. Currently, a packaging structure of the photonic chip and a fiber may be classified into an edge coupling packaging structure, a grating coupling packaging structure, and the like. The edge coupling packaging structure may be a packaging structure formed by directly or indirectly connecting an end face of the photonic chip to an end face of the fiber. The grating coupling packaging structure may be a packaging structure formed by optically connecting the photonic chip to the fiber through a grating. Although the grating coupling packaging structure has advantages such as a large tolerance and easy adjustment, the grating generates a loss of an optical signal. However, the edge coupling packaging structure becomes a main form of the coupling packaging structure due to advantages such as a low packaging loss and a small size.

In a packaging form of an edge coupling structure, a spot size converter (spot size converter, SSC) may be disposed at an edge of the photonic chip, in other words, at an end of the photonic chip, so that a spot size of the waveguide matches a spot size of the fiber. The spot size converter may be in a form of a cantilever. A bottom of a cantilever spot size converter is etched to form a first groove, a waveguide is suspended relative to the first groove to form a cantilever beam waveguide, and a transmitted optical signal is limited to be transmitted in the cantilever beam waveguide through air in the first groove, to implement mode field matching and reduce packaging losses. A packaging manner of using the cantilever spot size converter is end face bonding coupling. However, a cantilever structure is stress-sensitive. For example, a change in an ambient temperature, application of an external force, movement of a packaging structure, or the like may cause a stress to be applied to the cantilever beam waveguide, leading to a change in an optical transmission characteristic of the cantilever beam waveguide. A high stress may further cause damage to a mechanical structure of the waveguide. In addition, if the photonic chip and the fiber array are directly packaged, the fiber is prone to shift, and mechanical reliability of the packaging is poor.

Therefore, in an edge coupling packaging structure that includes a cantilever spot size converter, how to implement stress balance of a cantilever structure and ensure that a fiber is not prone to shift is a pressing technical challenge.

In view of this, embodiments of this application provide a packaging structure, an optical module, and an optical system. A chip lid is disposed on a photonic chip to form a chip unit, to increase a bonding area between the chip unit and a fiber array, improve mechanical stability of the packaging structure, and implement stress balance of a cantilever beam waveguide.

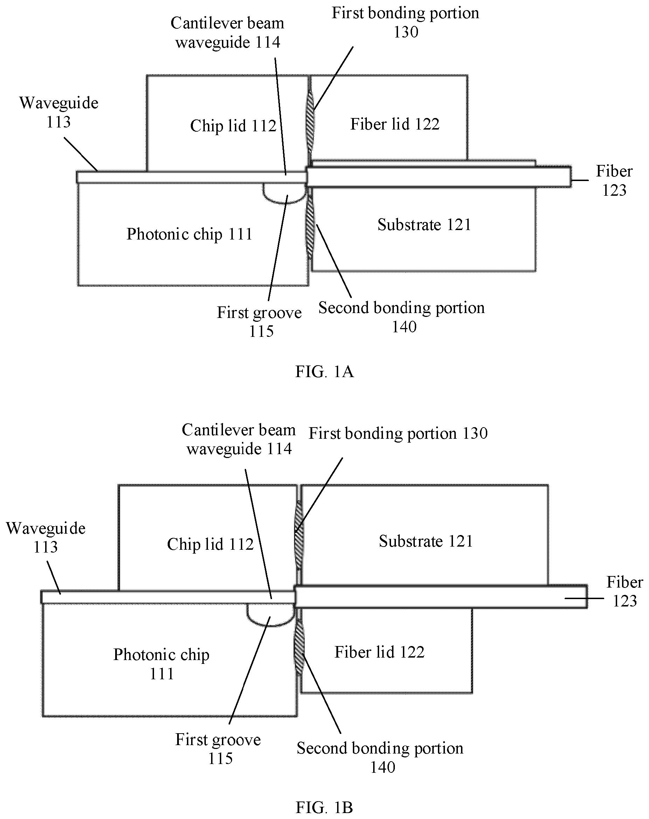

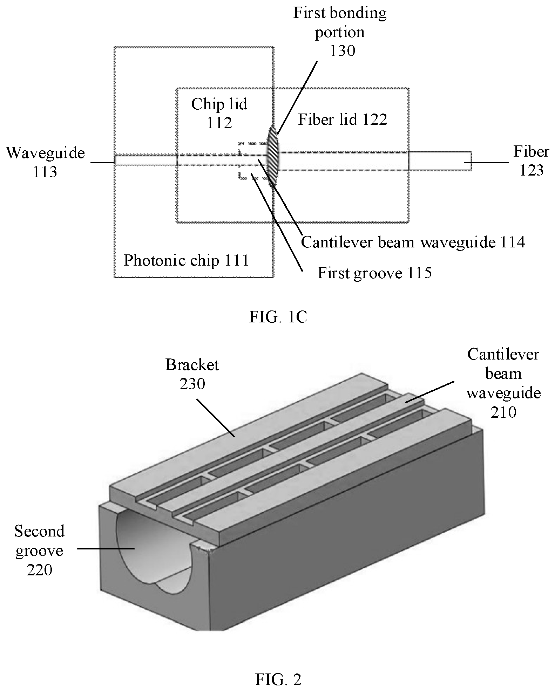

FIG. 1A to FIG. 1C are diagrams of a packaging structure according to an embodiment of this application. FIG. 1A and FIG. 1B show side views of the packaging structure, and FIG. 1C shows a top view of the packaging structure. As shown in FIG. 1A to FIG. 1C, the packaging structure may include a chip unit and a fiber unit. The chip unit includes a photonic chip 111 and a chip lid 112. The chip lid 112 is snap-fitted to the photonic chip 111, and a snap-fit connection manner may be bonding by using glue or another manner. A spot size converter is disposed in the photonic chip, and the spot size converter includes a cantilever beam waveguide 114 and a first groove 115, where the cantilever beam waveguide 114 is not in contact with the first groove 115.

The cantilever beam waveguide 114 may be specifically a suspended part of a waveguide 113 relative to the first groove 115. Alternatively, the cantilever beam waveguide 114 and the waveguide 113 may be discrete optical components, and an optical element like a coupler or a beam splitter is disposed between the cantilever beam waveguide 114 and the waveguide 114. This is not limited in this application. There is a gap between the cantilever beam waveguide 114 and the first groove 115, or it may be understood as that there is a spacing between the cantilever beam waveguide 114 and the first groove 115 or that the cantilever beam waveguide 114 is not in contact with the first groove 115. In addition, the first groove may also be referred to as an undercut (undercut).

The fiber unit includes a substrate 121, a fiber lid 122, and a fiber 123. A second groove is provided on the substrate 121, the second groove may be a V-groove (V-groove), and the second groove is configured to accommodate the fiber. The fiber lid 122 is snap-fitted to the substrate 121, and a snap-fit manner may be bonding by using glue or another manner. The fiber unit may also be referred to as a fiber array.

The cantilever beam waveguide 114 is coupled to the fiber 123. That the cantilever beam waveguide 114 is coupled to the fiber 123 may specifically mean that the cantilever beam waveguide 114 is directly or indirectly optically connected to the fiber 123. The indirect optical connection may mean that an adapter, a lens, a polymer waveguide, or the like is disposed between the cantilever beam waveguide 114 and the fiber 123.

In some implementations, as shown in FIG. 1A, a first bonding portion 130 is disposed between the chip lid 112 and the fiber lid 122, and a second bonding portion 140 is disposed between the photonic chip 111 and the substrate 121.

In some implementations, as shown in FIG. 1B, a first bonding portion 130 is disposed between the chip lid 112 and the substrate 121, and a second bonding portion 140 is disposed between the photonic chip 111 and the fiber lid 122.

In the packaging structure shown in FIG. 1A to FIG. 1C, the chip lid is disposed on the photonic chip, to increase a bonding area between the chip unit and the fiber unit, improve mechanical stability of the packaging structure, avoid fiber position movement or even fiber disconnection caused by a change in an ambient temperature, and implement alignment between the waveguide in the photonic chip and a fiber in the fiber array. In addition, the chip lid may also be added to balance stresses above and below a position of the first groove near the first bonding portion, to implement low-stress packaging of the cantilever beam waveguide. The chip lid may be a square lid or an irregular lid. This is not limited in this application.

In some implementations, as shown in FIG. 1A to FIG. 1C, a bottom of the fiber unit is suspended, and that the cantilever beam waveguide 114 is coupled to the fiber 123 includes that an end of the cantilever beam waveguide 114 is butted with an end of the fiber 123. This reduces coupling components, shortens a transmission distance of an optical signal, and reduce packaging losses. In addition, because the chip lid is disposed, a bonding area between the chip unit and the fiber unit can be increased. Even if the bottom of the fiber unit is suspended for accurate alignment between the waveguide and the fiber, mechanical stability of the packaging structure can be ensured.

In some implementations, a total area of the first bonding portion 130 and the second bonding portion 140 is greater than 1.5 mm², to ensure that the bonding area between the chip unit and the fiber array is increased, and the mechanical stability of the packaging structure is improved. An area of the first bonding portion 130 may be greater than 0.75 mm², and an area of the second bonding portion 140 may be greater than 0.75 mm².

In some implementations, a shrinkage rate of the first bonding portion 130 and/or a shrinkage rate of the second bonding portion 140 may be less than 0.3%, to prevent displacement between the chip unit and the fiber array/unit, ensure accurate alignment between the waveguide and the fiber, and reduce packaging losses. The first bonding portion 130 and/or the second bonding portion 140 may be made of epoxy resin or acrylic acid, to prevent displacement between the chip unit and the fiber unit, ensure accurate alignment between the waveguide and the fiber, reduce packaging losses, ensure a stable connection between the chip unit and the fiber unit, and improve the mechanical stability of the packaging structure. The first bonding portion 130 and the second bonding portion 140 may be formed together by using one type of glue in a packaging procedure, or may be formed separately through a plurality of bonding steps. The first bonding portion 130 and the second bonding portion 140 may be made of a same material or different materials. This is not limited in this application.

In some implementations, because the first bonding portion is disposed, a corresponding bonding material is filled into the first groove 115. In other words, a third bonding portion is disposed in the first groove 115, and the third bonding portion may be made of epoxy resin or acrylic acid. The third bonding portion may be in contact with the cantilever beam waveguide 114, or the third bonding portion covers the cantilever beam waveguide 114. A thickness of a part that is of the third bonding portion and that is located below the cantilever beam waveguide 114 may be the same as a thickness of a part that is of the third bonding portion and that is located above the cantilever beam waveguide 114, to further ensure stress balance at the cantilever beam waveguide.

In some implementations, the photonic chip includes N cantilever beam waveguides, the fiber unit includes N fibers, the N cantilever beam waveguides are in one-to-one correspondence with the N fibers, and a cantilever beam waveguide in the N cantilever beam waveguides is coupled to a corresponding fiber, where N is a positive integer. In some implementations, N is a positive integer greater than or equal to 2. When the packaging structure is a multi-channel packaging structure, the chip lid is added, to increase the bonding area between the chip unit and the fiber unit, improve stability of the packaging structure, and implement accurate alignment between a plurality of cantilever beam waveguides and a plurality of fibers.

FIG. 2 is a diagram of a spot size converter according to an embodiment of this application. The spot size converter includes a cantilever beam waveguide 210 and a second groove 220, and the cantilever beam waveguide 210 is not in contact with the second groove 220. The second groove 220 in the spot size converter may also be referred to as an undercut (undercut). The second groove 220 may be formed by etching a bottom of a photonic chip, so that the cantilever beam waveguide 210 is suspended relative to the second groove 220, to form a cantilever beam waveguide in a form of a cantilever. As shown in FIG. 2, the cantilever beam waveguide may be supported by using a bracket 230. In the spot size converter, an optical signal transmitted in a packaging structure may be limited to be transmitted in the cantilever beam waveguide through air in the second groove 220, to implement mode field matching and reduce packaging losses. In some implementations, another medium, for example, a polymer medium, may also be disposed in the second groove 220. This is not limited in this application. In the packaging structure provided in embodiments of this application, the spot size converter can increase a spot size of the cantilever beam waveguide 210 to 9 µm that is the same as that of the fiber.

When the spot size converter is disposed in the photonic chip, the cantilever beam waveguide is stress-sensitive. For example, a change in an ambient temperature, application of an external force, movement of a packaging structure, or the like may cause a stress to be applied to the cantilever beam waveguide, leading to a change in an optical transmission characteristic of the waveguide. A high stress may further cause damage to a mechanical structure of the waveguide. The chip lid is added, to increase the bonding area between the chip unit and the fiber unit, ensure mechanical stability of the packaging structure, reduce a change in a stress near the cantilever beam waveguide in the packaging structure due to a temperature change, displacement, application of an external force, or the like, and implement low-stress packaging.

When the photonic chip includes the cantilever beam waveguide, because the cantilever beam waveguide is fragile and it is difficult to ensure alignment of the chip lid with the end face of the photonic chip through grinding and polishing, a precision fixture may be used to fasten a relative position between the chip lid and the photonic chip, so that the chip lid can be snap-fitted to the photonic chip.

In some implementations, the spot size converter includes N cantilever beam waveguides. In this case, a transverse size of the second groove 220 may be correspondingly extended, and the bracket 230 is configured to support the N cantilever beam waveguides. The fiber unit includes N fibers, which are in one-to-one correspondence with the N cantilever beam waveguides of the spot size converter. The waveguides in the N cantilever beam waveguides are coupled to the corresponding fibers. When the packaging structure is a multi-channel packaging structure, the chip lid is added, to increase the bonding area between the chip unit and the fiber unit, reduce a change in a stress near the waveguide in the packaging structure due to a temperature change, displacement, application of an external force, or the like, implement low-stress packaging, improve stability of the packaging structure, reduce packaging losses, and implement accurate alignment between a plurality of waveguides and a plurality of fibers. According to the packaging structure in this application, a fiber with an outer diameter of 127 µm and an inner diameter of 125 µm may be used as a transmission medium of an optical signal, to implement a high-density horizontal pitch (pitch) arrangement solution, without using a conventional fiber with a size of 250 µm.

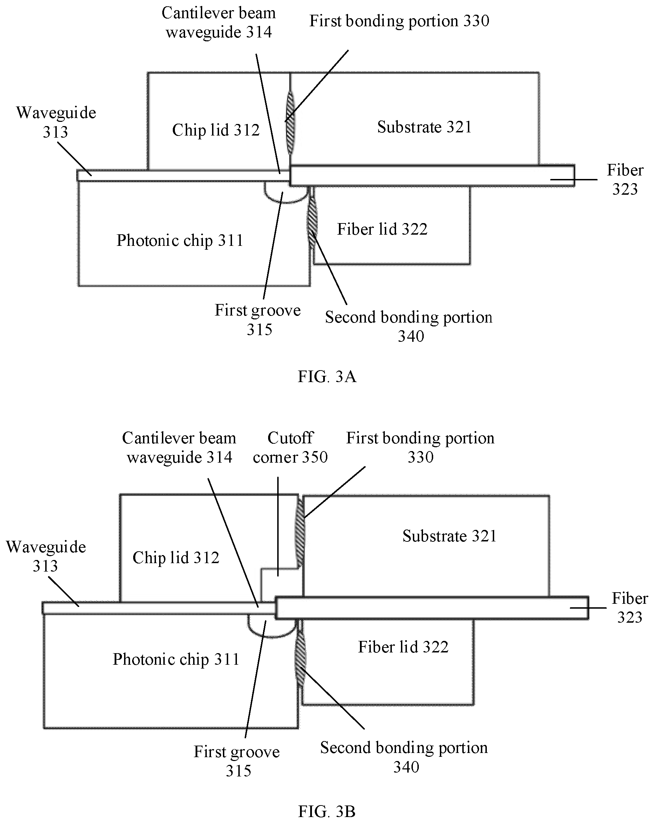

FIG. 3A and FIG. 3B are diagrams of another packaging structure according to an embodiment of this application. A chip unit and a fiber unit that are included in the packaging structure, a photonic chip 311, a chip lid 312, a waveguide 313, a cantilever beam waveguide 314, and a first groove 315 that are included in the chip unit, and a substrate 321, a fiber lid 322, and a fiber 323 that are included in a spot size fiber unit in FIG. 3A and FIG. 3B are similar to those in FIG. 1A to FIG. 1C. Details are not described herein again.

In some implementations, as shown in FIG. 3A, on a plane on which a bottom of the photonic chip 311 is located, a projection of the fiber 323 and a projection of the photonic chip 311 have an overlapping part, and a projection of the substrate 321 at least partially covers the overlapping part. In other words, the fiber 323 is extended to the photonic chip 311 together with the substrate 321. In a chip preparation procedure, to separate chips from each other, the chips need to be cut by using a knife or a laser. Therefore, in waveguide etching, the waveguide is recessed, to avoid damage to an end face of the waveguide caused by cutting. By extending the fiber to the photonic chip, a transmission distance of the optical signal can be shortened, and coupling efficiency can be optimized. In addition, because the substrate is also extended to the photonic chip, a specific contact area between the chip unit and the fiber unit is ensured, to improve the mechanical stability of the packaging structure. In addition, FIG. 3A shows only a case in which the substrate 321 is extended to the photonic chip 311. When a first bonding portion is disposed between the chip lid and the fiber lid, a projection of the fiber and a projection of the photonic chip have an overlapping part, and a projection of the fiber lid at least partially covers the overlapping part. In other words, the fiber is extended to the photonic chip together with the fiber lid.

In some implementations, as shown in FIG. 3B, on a plane on which a bottom of the photonic chip 311 is located, a projection of the fiber 323 and a projection of the photonic chip 311 have an overlapping part, and a projection of the chip lid 312 at least partially covers the overlapping part. The chip lid 312 has a cutoff corner, and the cutoff corner is configured to avoid the fiber 323. In a chip preparation procedure, to separate chips from each other, the chips need to be cut by using a knife or a laser. Therefore, in waveguide etching, the waveguide is recessed, to avoid damage to an end face of the waveguide caused by cutting. By extending the fiber to the photonic chip, a transmission distance of the optical signal can be shortened, and coupling efficiency can be optimized. In addition, to ensure that a contact area between the chip unit and the fiber unit is specific and that transmission of the optical signal is not affected, the cutoff corner needs to be disposed on the chip lid.

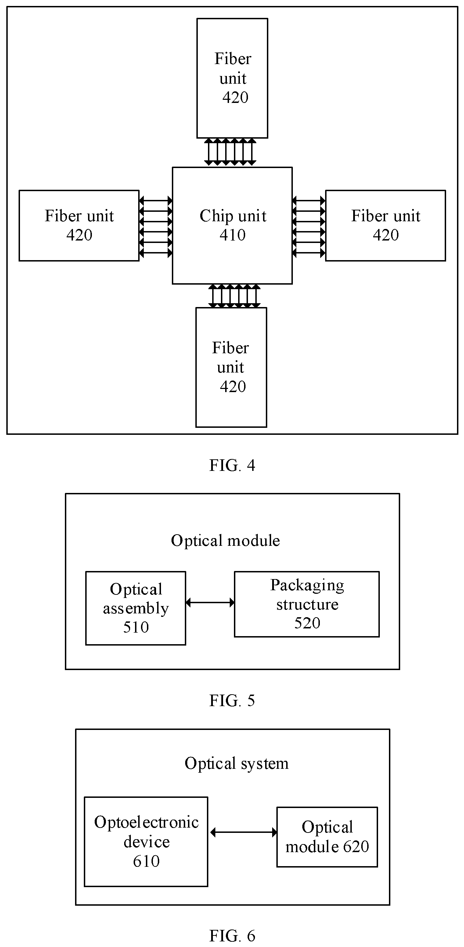

FIG. 4 is a diagram of another packaging structure according to an embodiment of this application. As shown in FIG. 4, the packaging structure includes M fiber units 420, a photonic chip includes M spot size converters 410, the M fiber units 420 are in one-to-one correspondence with the M spot size converters 410, and a fiber unit in the M fiber units is mutually coupled to a corresponding spot size converter, where M is a positive integer. In some implementations, M is a positive integer greater than or equal to 2. The packaging structure may be a co-packaging structure (coupled package optics, CPO), to shorten a transmission distance of an optical signal, reduce packaging losses, and reduce system costs and energy losses. It should be understood that FIG. 4 shows only a case in which M is equal to 4, and should not constitute a limitation on a specific form of the packaging structure.

In some implementations, the fiber unit in the M fiber units includes one fiber, and the spot size converter in the M spot size converters includes one cantilever beam waveguide. In this case, the fiber unit and the spot size converter are specifically configured to transmit optical signals in a single channel.

In some implementations, the fiber unit in the M fiber units includes N fibers, the spot size converter in the M spot size converters includes N cantilever beam waveguides, and N is a positive integer greater than or equal to 2. Each of the M fiber units may include a same quantity or different quantities of fibers. Correspondingly, each of the M spot size converters may include a same quantity or different quantities of cantilever beam waveguides. In this case, the fiber units and the spot size converters are specifically configured to transmit optical signals in a plurality of channels.

FIG. 5 is a diagram of an optical module according to an embodiment of this application. As shown in FIG. 5, the optical module may include an optical assembly 510 and a packaging structure 520. The optical assembly 510 is optically connected to the packaging structure 520, and the optical assembly 510 is configured to receive and/or send an optical signal. A specific disposition of the packaging structure 520 is shown in FIG. 1A to FIG. 5. When the optical assembly 510 is configured to send an optical signal, the optical assembly 510 may include a light source, a modulator, a filter, and the like. When the optical assembly 510 is configured to receive an optical signal, the optical assembly 510 may include a processor, a detector, and the like. In some implementations, the optical assembly 510 includes light sources of a plurality of wavelengths, and the corresponding packaging structure 520 is configured to send and/or receive optical signals of the plurality of wavelengths.

Each component included in the optical assembly may be disposed in a photonic chip in the packaging structure, or each component included in the optical assembly and the photonic chip and a fiber unit both included in the packaging structure are discrete elements. A specific form of the optical module is determined according to an actual situation. An optical connection between the optical assembly 510 and the packaging structure 520 may be a direct optical connection or an indirect optical connection. The indirect optical connection may mean that an optical element like a coupler or a beam splitter is disposed between a component in the optical assembly 510 and the photonic chip or the fiber unit in the packaging structure 520.

In some implementations, the optical module further includes a printed circuit board (printed circuit board, PCB), and the PCB is electrically connected to the photonic chip in the packaging structure 520. A specific electrical connection manner may be welding by using a conducting wire or a flat cable, wire bonding, or connection by using a socket or a pin. The PCB may be configured to process an optical signal sent and/or received by the photonic chip. For example, the PCB is configured to send an electrical signal, and the photonic chip is configured to convert the electrical signal into an optical signal for sending. Alternatively, the photonic chip is configured to receive an optical signal, and the PCB is configured to: convert the optical signal into an electrical signal and process the electrical signal.

When the packaging structure is in the CPO packaging form shown in FIG. 4, the optical module may also be referred to as an optical engine.

FIG. 6 is a diagram of an optical system according to an embodiment of this application. As shown in FIG. 6, the optical system may include an optoelectronic device and the optical module shown in FIG. 6. The optoelectronic device may be any one of an optical switch, a fiber router, and a fiber network adapter, and the optoelectronic device is connected to the optical module.

The optoelectronic device may include a plurality of ports, each of the plurality of ports corresponds to one optical transmission channel, and the port in the plurality of ports is connected to the optical module, to implement multi-channel and high-rate data transmission. The optical switch may be configured to implement data exchange between the plurality of optical transmission channels. The fiber router may be configured to convert an optical signal into a data signal, and implement forwarding and route selection of the data signal. The fiber network adapter may be used in an Ethernet network to implement a connection between a computer and a fiber.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A packaging structure, comprising a chip unit and a fiber unit, wherein
the chip unit comprises a photonic chip and a chip lid, the chip lid is snap-fitted to the photonic chip, a spot size converter is disposed in the photonic chip, the spot size converter comprises a cantilever beam waveguide and a first groove, and there is a gap between the cantilever beam waveguide and the first groove; and
the fiber unit comprises a fiber, a substrate, and a fiber lid, wherein a second groove is provided on the substrate, the second groove is configured to accommodate the fiber, and the fiber lid is snap-fitted to the substrate, wherein
the cantilever beam waveguide is coupled to the fiber; and
a first bonding portion is disposed between the chip lid and the substrate, and a second bonding portion is disposed between the photonic chip and the fiber lid; or
a first bonding portion is disposed between the chip lid and the fiber lid, and a second bonding portion is disposed between the photonic chip and the substrate.

2. The packaging structure according to claim 1, wherein a bottom of the fiber unit is suspended, and that the cantilever beam waveguide is coupled to the fiber comprises that an end of the cantilever beam waveguide is butted with an end of the fiber.

3. The packaging structure according to claim 1 or 2, wherein
on a plane on which a bottom of the photonic chip is located, a projection of the fiber and a projection of the photonic chip have an overlapping part, and a projection of the fiber lid or the substrate that is provided with the first bonding portion between the fiber lid or the substrate and the chip lid at least partially covers the overlapping part.

4. The packaging structure according to claim 1 or 2, wherein
on a plane on which a bottom of the photonic chip is located, a projection of the fiber and a projection of the photonic chip have an overlapping part, and a projection of the chip lid at least partially covers the overlapping part; and
the chip lid has a cutoff corner, and the cutoff corner is configured to avoid the fiber.

5. The packaging structure according to any one of claims 1 to 4, wherein
the first bonding portion and/or the second bonding portion are/is made of epoxy resin or acrylic acid; and/or
a shrinkage rate of the first bonding portion and/or a shrinkage rate of the second bonding portion are/is less than 0.3%.

6. The packaging structure according to any one of claims 1 to 5, wherein the spot size converter comprises N cantilever beam waveguides, the fiber unit comprises N fibers, the N cantilever beam waveguides are in one-to-one correspondence with the N fibers, and a cantilever beam waveguide in the N cantilever beam waveguides is mutually coupled to a corresponding fiber, wherein N is a positive integer.

7. The packaging structure according to any one of claims 1 to 6, wherein
the packaging structure comprises M fiber units, the photonic chip comprises M spot size converters, the M fiber units are in one-to-one correspondence with the M spot size converters, and a fiber unit in the M fiber units is mutually coupled to a corresponding spot size converter, wherein M is a positive integer.

8. An optical module, comprising the packaging structure according to any one of claims 1 to 7 and an optical assembly, wherein the optical assembly is optically connected to the packaging structure, and the optical assembly is configured to receive and/or send an optical signal.

9. An optical system, comprising an optoelectronic device and the optical module according to claim 8, wherein the optoelectronic device is connected to the optical module, and the optoelectronic device is any one of an optical switch, a fiber router, and a fiber network adapter.
